# EUROPEAN PATENT APPLICATION

(11) **EP 4 588 880 A1**
(43) Date of publication of application: **23.07.2025**
(21) Application number: 25152562.2
(22) Date of filing: 17.01.2025
(51) Int. Cl.: B66F 9/075, B60T 7/10, B62H 5/04, F16B 21/20, B66F 9/20, B62B 5/04, B62B 5/06, B62D 51/04

(54) **MOTION CONTROL SYSTEMS AND METHODS FOR A MATERIAL HANDLING VEHICLE**

(30) Priority: 18.01.2024 US 202463622427 P
(71) Applicant: The Raymond Corporation, Greene, NY 13778 (US)
(72) Inventor: HOFF, William, Tillsonburg, Ontario N4G 5N1 (CA)
(74) Representative: Zacco Sweden AB

(57) **Abstract**

A control arm lock assembly (235) for a material handling vehicle (100) can include an inner sleeve (325) defining a central opening (315), an actuator (240), a stem (245), selectively actuated via the actuator (240), arranged within the opening (315), a bushing (310) arranged within the central opening (315) between the stem (245) and an inner surface (320) of the inner sleeve (325), and a resilient locking member (345) arranged within the central opening (315). In one example, the resilient locking member (345) is axially constrained between a head (305) of the stem (245) and the bushing (310). In one example, actuation of the stem (245) via the actuator (240) compresses the resilient locking member (345) between the head (305) and the bushing (310). In one example, compression of the resilient locking member (345) causes the resilient locking member (345) to engage the inner surface (320) of the inner sleeve (325) to lock the stem (245) to the inner sleeve (325).

## Description

### CROSS-REFERENCE TO RELATED APPLICATIONS

This application claims the benefit of U.S. Provisional Application No. 63/622,427, filed January 18, 2024, which is hereby incorporated by reference in its entirety.

### BACKGROUND

To facilitate order picking, some material handle vehicles (MHVs) may include a coast system, which may be selectively activated by an operator to permit the MHV to coast forward even when an operator is not in direct contact with the MHV (e.g., not touching a control arm of the MHV). For example, when activated, the coast system may lock the control arm (e.g., tiller arm) into a predetermined position (e.g., at a predetermined angle) to prohibit unwanted activation of a deadman brake. However, the one-size-fits-all locked position of the control arm may not be ergonomic or may be in an uncomfortable position for some operators, which may decrease operator efficiency.

### SUMMARY

In one aspect, the present disclosure provides a control arm lock assembly for a material handling vehicle. The control arm lock assembly includes an inner sleeve defining a central opening, an actuator, a stem, selectively actuated via the actuator and arranged within the opening, a bushing arranged within the central opening between the stem and an inner surface of the inner sleeve, and a resilient locking member arranged within the central opening. In one example, the resilient locking member is axially constrained between a head of the stem and the bushing. In one example, actuation of the stem via the actuator compresses the resilient locking member between the head and the bushing. In one example, compression of the resilient locking member causes the resilient locking member to engage the inner surface of the inner sleeve to lock the stem to the inner sleeve.

Some aspects of the disclosure can provide the control arm lock assembly of any previous aspect in which the resilient locking member is a resilient O-ring.

Some aspects of the disclosure can provide the control arm lock assembly of any previous aspect in which the resilient locking member is a resilient washer.

Some aspects of the disclosure can provide the control arm lock assembly of any previous aspect in which the head of the stem defines a disk-shaped profile forming a pocket between the head and the bushing, the pocket configured to receive the resilient locking member.

Some aspects of the disclosure can provide the control arm lock assembly of any previous aspect in which the head of the stem defines a cone-shaped profile including angled surfaces, and wherein actuation of the stem causes the resilient locking member to be pushed away from the stem, into contact with the inner surface of the inner sleeve, via the angled surfaces of the head.

Some aspects of the disclosure can provide the control arm lock assembly of any previous aspect in which the inner surface of the inner sleeve defines a smooth, continuous, surface profile.

Some aspects of the disclosure can provide the control arm lock assembly of any previous aspect in which the inner sleeve includes a cutout, and wherein the cutout receives a collar positioned between the inner surface of the inner sleeve and the resilient locking member.

Some aspects of the disclosure can provide the control arm lock assembly of any previous aspect further including an outer sleeve circumferentially arranged around the inner sleeve, a ledge extending from the inner sleeve towards the outer sleeve, a gap formed between the inner sleeve and the outer sleeve via the ledge, and a biasing element arranged within the gap.

Some aspects of the disclosure can provide the control arm lock assembly of any previous aspect in which the biasing element opposes a braking force of a deadman brake system when the inner sleeve is locked to the stem such that a control arm of the material handling vehicle is locked into a position set by an operator of the material handling vehicle.

Some aspects of the disclosure can provide the control arm lock assembly of any previous aspect in which actuation of the outer sleeve, via actuation of a control arm of the vehicle, compresses the biasing element within the gap.

In another aspect, the present disclosure provides a method of locking a control arm of a material handing vehicle. The method includes actuating a stem of a control arm lock assembly in a first direction via activation of an actuator, compressing a resilient locking member between a head of the stem and a bushing circumferentially surrounding a portion of the stem, and frictionally locking movement of the stem to an inner sleeve of the control arm lock assembly via frictional engagement between the resilient locking member and an inner surface of the inner sleeve.

Some aspects of the disclosure can provide the method of any previous aspect in which the resilient locking member is a resilient O-ring.

Some aspects of the disclosure can provide the method of any previous aspect in which the resilient locking member is a resilient washer.

Some aspects of the disclosure can provide the method of any previous aspect in which the inner surface of the inner sleeve defines a smooth, continuous, surface profile.

Some aspects of the disclosure can provide the method of any previous aspect in which the inner sleeve includes a cutout, and wherein the cutout receives a collar positioned between the inner surface of the inner sleeve and the resilient locking member.

In another aspect, the present disclosure provides a control arm lock assembly for a material handling vehicle. The control arm lock assembly can include an inner sleeve defining a central opening, a stem arranged within the central opening, the stem having a head portion and a reduced diameter body portion extending from the body portion, a bushing circumferentially surrounding the stem to form a pocket between the bushing and the head portion of the stem, a resilient locking member arranged within the pocket, and an actuator operably connected to the stem to move the stem between a first position, where the inner sleeve is moveable with respect to the stem, and a second position, where the movement of the inner sleeve with respect to the stem is locked.

Some aspects of the disclosure can provide the control arm lock assembly of any previous aspect in which, in the second position, the stem compresses the resilient locking member so that the resilient locking member engages the inner surface of the inner sleeve to lock the stem to the inner sleeve.

Some aspects of the disclosure can provide the control arm lock assembly of any previous aspect in which, in the second position, the resilient locking member is compressed between the head of the stem and an end of the bushing.

Some aspects of the disclosure can provide the control arm lock assembly of any previous aspect in which the inner surface of the inner sleeve defines a smooth, continuous, surface profile.

Some aspects of the disclosure can provide the control arm lock assembly of any previous aspect in which the inner sleeve includes a cutout, and wherein the cutout receives a collar positioned between the inner surface of the inner sleeve and the resilient locking member.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a perspective view of a material handling vehicle according to aspects of the present disclosure.
FIG. 2 is a partial cross-sectional view of a coast system of the material handling vehicle of FIG. 1 according to aspects of the present disclosure.
FIG. 3 is a cross-sectional view of a control arm lock assembly of the coast system of FIG. 2 according to aspects of the present disclosure.
FIG. 4 is a cross-sectional view of another example of the control arm lock assembly of the coast system of FIG. 2 according to aspects of the present disclosure.
FIG. 5 is a cross-sectional view of another example of the control arm lock assembly of the coast system of FIG. 2 according to aspects of the present disclosure.
FIG. 6 is a cross-sectional view of another example of the control arm lock assembly of the coast system of FIG. 2 according to aspects of the present disclosure.
FIG. 7 is a cross-sectional view of another example of the control arm lock assembly of the coast system of FIG. 2 according to aspects of the present disclosure.
FIG. 8 is a cross-sectional view of another example of the control arm lock assembly of the coast system of FIG. 2 according to aspects of the present disclosure.
FIG. 9 is a cross-sectional view of another example of the control arm lock assembly of the coast system of FIG. 2 according to aspects of the present disclosure.
FIG. 10 is a cross-sectional view of another example of the control arm lock assembly of the coast system of FIG. 2 according to aspects of the present disclosure.

### DETAILED DESCRIPTION

The following discussion is presented to enable a person skilled in the art to make and use embodiments of the invention. Given the benefit of this disclosure, various modifications to the illustrated embodiments will be readily apparent to those skilled in the art, and the principles herein can be applied to other embodiments and applications without departing from embodiments of the invention. Thus, embodiments of the invention are not intended to be limited to embodiments shown but are to be accorded the widest scope consistent with the principles and features disclosed herein.

The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

It is also to be appreciated that material handling vehicles (MHVs) are designed in a variety of classes and configurations to perform a variety of tasks. It will be apparent to those of skill in the art that the present disclosure is not limited to any specific MHV, and can also be provided with various other types of MHV classes and configurations, including for example, lift trucks, forklift trucks, reach trucks, SWING REACH^{®} vehicles, turret trucks, side loader trucks, counterbalanced lift trucks, pallet stacker trucks, order pickers, transtackers, tow tractors, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles. Further, the present disclosure is not limited to material handling vehicles applications. Rather, the present disclosure may be provided for other types of vehicles, such as automobiles, buses, trains, tractor-trailers, farm vehicles, factory vehicles, and the like.

It should be noted that the various material handling vehicles (MHVs) listed above may perform a variety of load handling operations. For example, the MHVs may operate the MHV and/or the load handling portion (e.g., forks, mast, and/or fork carriage, etc.) of the MHV to traverse (e.g., move the forks up to a full load depth), tilt, reach (e.g., move the forks up to a partial load depth), rotate, drive (e.g., move the MHV), travel (e.g., move the MHV), and/or any combination thereof to complete a load handling operation.

As should be noted, for certain types of vehicles there are training requirements imposed by various government agencies, laws, rules and regulations. For example, OSHA imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

In one example, a material handling vehicle (MHV) may include a coast system configured to permit an operator to allow the MHV to coast (e.g., continue unpowered movement due to momentum of the MHV) even when the operator is not in direct contact with the MHV. In one example, the MHV may further include a deadman brake system configured to automatically stop or brake the MHV when an operator releases a control arm of the MHV. In one example, the coast system is configured to override the deadman brake system. For example, the coast system may lock the position of the control arm of the MHV at an operator desired position. Thus, the operator may position the control arm in a desired position and then engage the coast system to lock the control arm into position and prohibit automatic braking or stopping of the MHV via the deadman brake system.

In one example, the coast system may include a control arm lock assembly configured to lock the position of the control arm of the MHV. In one example, the control arm lock assembly may further include a stem that may be selectively actuated via an actuator. In one example, the stem may include a head positioned at one end of the stem. The head may be configured to compress or deform a resilient locking member positioned between the head and a bushing. In one example, compression of the locking member radially expands the locking member such that the locking member engages the inner surface of the inner sleeve. In one example, engagement between the locking member and the inner sleeve locks the stem to the inner sleeve. Thus, with the stem and the inner sleeve locked together, the control arm is held in the selected position by a biasing member arranged between the inner sleeve and an outer sleeve of the control arm lock assembly. In one example, a force applied on the outer sleeve by the biasing element is configured to oppose the force of the deadman brake system to lock the control arm in the selected position.

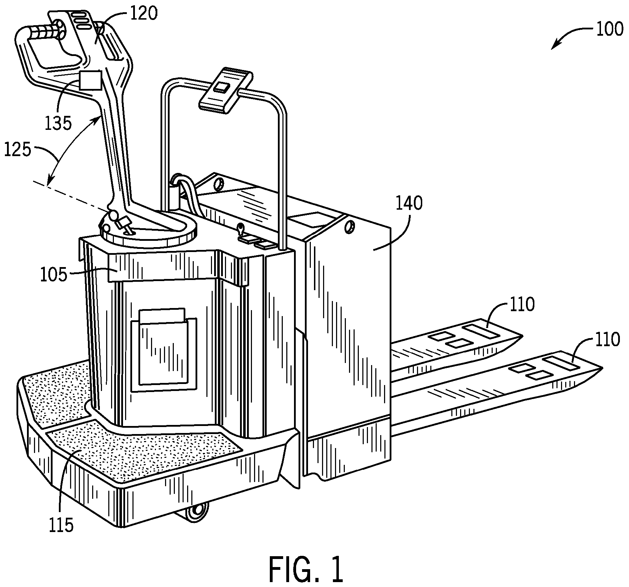

FIG. 1 illustrates an example of material handling vehicle 100. The material handling vehicle 100 may include a body 105 having one or more forks 110 extending away from a first end of the body105 (e.g., adjacent a battery 140) and a platform 115 extending away from a second, opposite, end of the body 105. In one example, the forks 110 may be configured to carry or support a load (e.g., a pallet, barrel, etc.). Correspondingly, the platform 115 may be configured to carry or support an operator during operation of the material handling vehicle 100. However, in other examples, the material handling vehicle 100 may not include the platform 115 and the operator may instead stand on the floor or ground during operation of the material handling vehicle 100.

To permit an operator to operate (e.g., steer, accelerate, decelerate, stop, etc.) the material handling vehicle 100, the material handling vehicle 100 may include a control arm 120. The control arm 120 may be rotatable or pivotable through a predetermined range (e.g., angle 125) to control steering (i.e., movement direction) or braking of the material handling vehicle 100. For example, the operator may move the control arm 120 vertically (e.g., up and down) to control braking or enable a movement operation of the material handling vehicle 100. Correspondingly, the operator may move the control arm 120 laterally (e.g., side to side) to control a steering direction of a steer wheel of the material handling vehicle 100. In one particular example, the material handling vehicle 100 may release the brakes and allow operation as the control arm 120 approaches a horizontal position but may stop or brake when the control arm 120 reaches a substantially horizontal position. Correspondingly, the material handling vehicle 100 may release the brakes and allow operation as the control arm 120 approaches a vertical position but may stop or brake when the control arm 120 reaches a substantially vertical position. In one example, a deadman brake system may automatically position the control arm 120 into the substantially vertical position, which stops or brakes the material handling vehicle 100, when an operator releases the control arm 120.

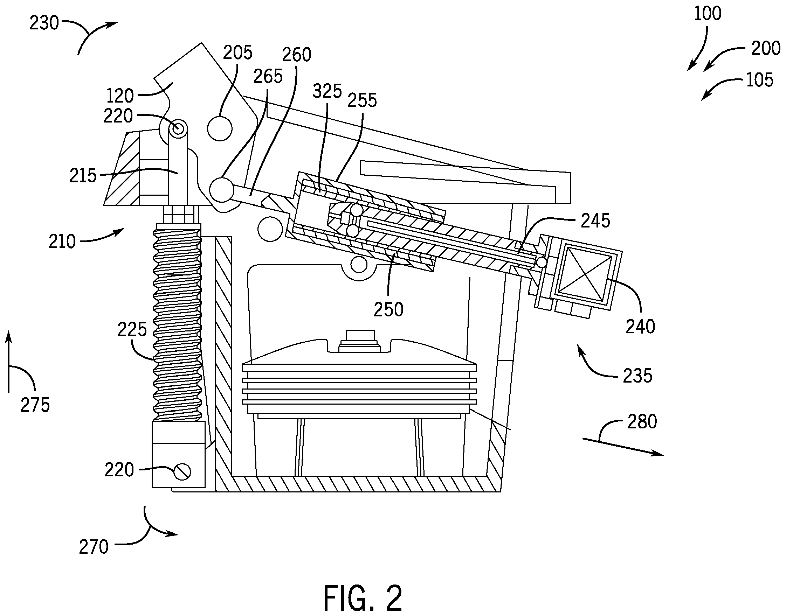

FIG. 2 shows a cross-sectional view of a portion of the body 105 of the material handling vehicle 100 including a coast system 200. The coast system 200 may selectively disable automatic stopping or braking of the material handling vehicle 100 via a deadman brake by locking the position of the control arm 120. For example, as described previously, the control arm 120 may be rotated or pivoted vertically about a pivot point 205 to enable operation of the material handling vehicle 100 by releasing the brake. However, under normal operation, a deadman brake system 210 applies a force in the direction shown by arrow 275 to rotate the control arm 120 about the pivot point 205 in the direction shown by arrow 230, which moves the control arm 120 into the vertical or substantially vertical position and stops or brakes the material handling vehicle 100 automatically when the operator releases the control arm 120. To facilitate this, the deadman brake system 210 may include a shaft 215 secured between the control arm 120 and the body 105 via one or more fasteners 220 and a biasing element 225 (e.g., a spring) circumferentially arranged around the shaft 215. During operation or movement of the control arm 120 from the vertical or substantially vertical position, the biasing element 225 may be compressed, which generates an increased force in the biasing element 225. Thus, after an operator releases the control arm 120, the force stored within the biasing element 225 releases, which expands the biasing element 225 in the direction shown by arrow 275 and can automatically return the control arm 120 to the vertical or substantially vertical position via pivoting about the pivot point 205 in the direction shown by arrow 230, which stops or brakes the material handling vehicle 100.

To selectively override the deadman brake system 210 (e.g., to enable a coast or jog operation of the material handling vehicle 100), the material handling vehicle 100 may include a control arm lock assembly 235. The control arm lock assembly 235 may be connected between the control arm 120 and the body 105 of the material handling vehicle 100 at a connection point 265, which may be positioned below the pivot point 205 of the control arm 120 such that force applied via the control arm lock assembly 235 opposes the force applied via the deadman brake system 210 and locks the position of the control arm 120 (e.g., selectively prevents automatic stopping or braking of the material handling vehicle 100 via the deadman brake system 210).

In one example, the control arm lock assembly 235 may be connected to the control arm 120 via a rod 260 extending away from the connection point 265. The rod 260 may extend into an outer sleeve 255 configured to retain a biasing element 250 (e.g., a spring), which may offset the force from the biasing element 225 in the deadman brake system 210. In one particular example, the biasing element 250 may selectively oppose the biasing force of the deadman brake system 210 to lock the position of the control arm 120 when actuation of the stem 245 in the direction shown by arrow 280 via an actuator 240 (e.g., a solenoid) locks the stem 245 to an inner sleeve 325.

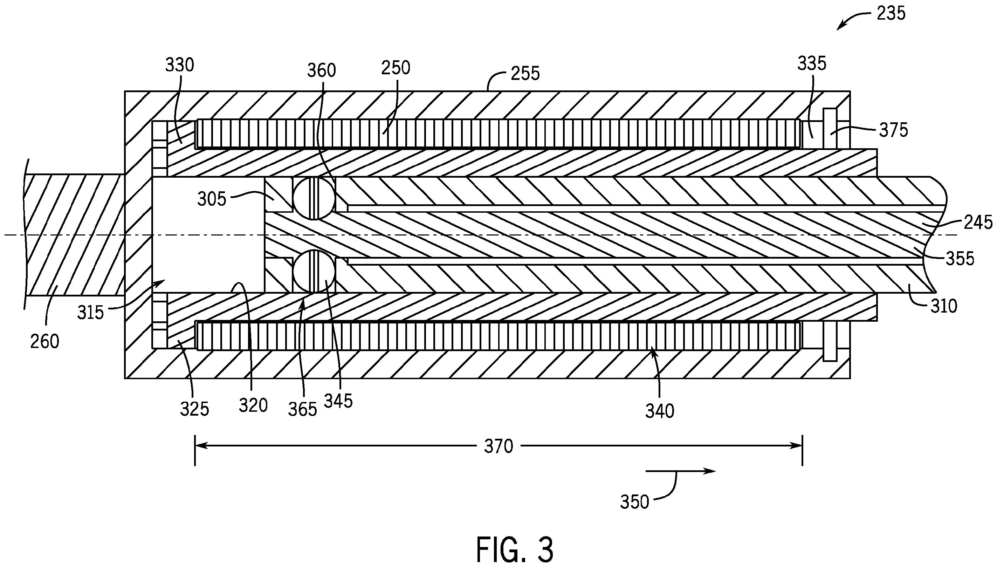

FIG. 3 illustrates an example of the control arm lock assembly 235 of the coast system 200. As discussed previously, the control arm lock assembly 235 may include the stem 245, which may be selectively actuated via the actuator 240 (e.g., as shown in FIG. 2). In one example, the stem 245 may include a head 305 positioned at one end of a shaft 355 of the stem 245. In one example, the head 305 may be disk-shaped (e.g., with a T-shaped cross-section). The shaft 355 may extend from the head 305 to the actuator 240, with the shaft 355 extending through a bushing 310, which may be a component of the actuator 240 that may be fixed to the vehicle 100. In one example, the bushing 310 may be positioned within an opening 315 of the control arm lock assembly 235 such that the bushing 310 is positioned (e.g., sandwiched) between the shaft 355 and an inner surface 320 of an inner sleeve 325. Thus, the outer sleeve 255 may circumferentially surround the inner sleeve 325, which may circumferentially surround the bushing 310, which in turn may circumferentially surround the shaft 355. The opening 315 is positioned in general centrally, e.g defining a central opening 315.

In one example, the inner sleeve 325 may include a ledge 330 extending towards the outer sleeve 255, while the outer sleeve 255 may include a spacer 335 extending towards the inner sleeve 325 and secured by a snap ring 375. Together, the ledge 330 of the inner sleeve 325 and the spacer 335 of the outer sleeve 255 may define a gap 340. The gap 340 may be configured to receive the biasing element 250 (e.g., spring) described previously. In another example, an inner surface of the inner sleeve 325 may include a smooth, continuous surface profile (i.e., opposing sides of the inner surface may be parallel).

In use, the control arm lock assembly 235 may be configured to oppose the force of the deadman brake system 210 via the biasing element 250. For example, when an operator activates a switch or button 135 (see, FIG. 1), the actuator 240 may actuate the stem 245 in the direction shown by arrow 350. In one example, actuation of the stem 245 compresses or deforms a locking member 345 positioned within a pocket 365 formed between the head 305 of the stem 245 and an end 360 of the bushing 310. The locking member 345 is preferred to be resilient. In one example, the locking member 345 may be in the form of a resilient O-ring (e.g., O-ring made from rubber or any other known resilient material, having a circular cross-section). Thus, compression of the locking member 345 causes the locking member 345 to radially expand and engage the inner surface 320 of the inner sleeve 325, which locks the inner sleeve 325 to the stem 245.

In one example, when the control arm 120 is not locked (e.g., the control arm lock assembly is not activated via the button 135 movement of the control arm 120 generates corresponding movement in the outer sleeve 255 and the inner sleeve 325 with respect to the fixed bushing 310. However, when the control arm 120 is locked (e.g., the control arm lock assembly is activated via the button 135) the locking member 345 locks the inner sleeve 325 to the stem 245, which locks the control arm 120 into the selected position. In another example, an operator may override the control arm lock to brake the vehicle 100 via actuation of the control arm 120, which moves the outer sleeve 255 relative to the fixed inner sleeve 325 and decreases a size 370 (e.g., length) of the gap 340 such that the biasing element 250 is compressed between the ledge 330 of the inner sleeve 325 and the spacer 335 of the outer sleeve 255.

In one example, the biasing element 250 is configured to offset the force of the deadman brake system 210 when the inner sleeve 325 is locked to the stem 245. For example, a force is applied to the spacer 335 and thus to the outer sleeve 255 via the biasing element 250 to prevent compression of the biasing element 250 (e.g., via movement of the control arm 120). Put differently, a force is applied to the control arm 120 via the rod 260 at the connection point 265, which applies a counteracting force to the control arm 120 in the direction shown by arrow 270 (e.g., opposing a force from the deadman brake system 210, see, e.g., FIG. 2), to prevent automatic braking or stopping of the material handling vehicle 100. Thus, the control arm lock assembly 235 enables an operator to lock the position of the control arm 120 such that the material handling vehicle 100 may coast or jog without automatically stopping or braking due to the deadman brake system 210.

As the control arm lock assembly 235 operates based on a friction locking mechanism and does not utilize fixed detents, the operator may lock the control arm 120 in any position desired. For example, in use, an operator may position the control arm 120 at any angle or height convenient for the operator to reach or operate. Following this, the operator may press a button, switch, etc. to activate the actuator 240, which locks the position of the control arm 120 as discussed previously. In one particular example, the actuator may be a solenoid actuator having a moveable armature. Thus, when an operator presses the button, the solenoid may be energized, and the armature may actuate to move the stem 245.

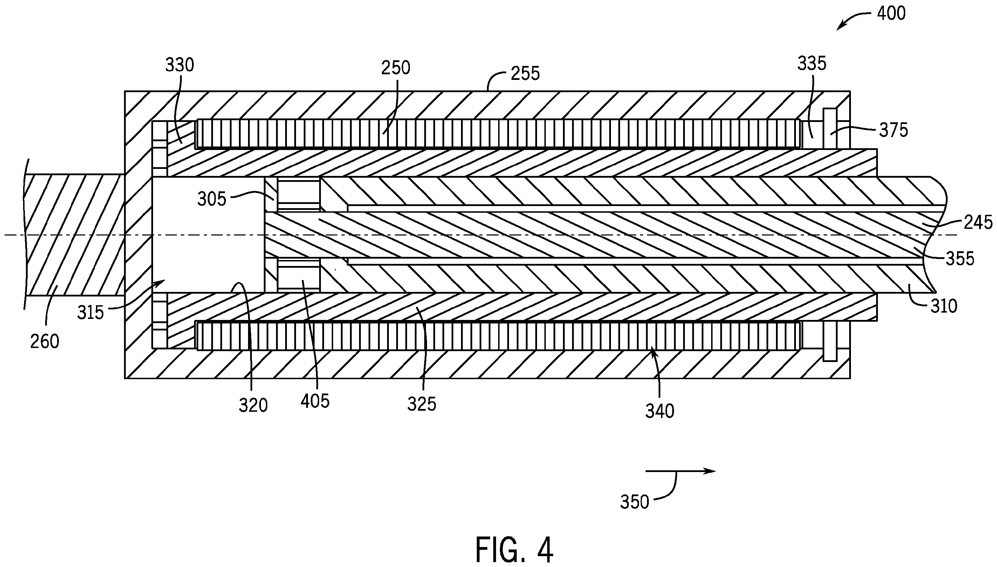

FIG. 4 illustrates another example of a control arm lock assembly 400 that can be used with the coast system 200 of FIG. 2 (e.g., as an alternative configuration of the control arm lock assembly 235). As will be recognized, the control arm lock assembly 400 shares a number of components in common with and operates in a similar fashion to the examples illustrated and described previously. For the sake of brevity, these common features will not be again described below in detail. Rather, previous discussion of commonly named or numbered features, unless otherwise indicated, also applies to example configurations of the control arm lock assembly 400.

In one example, the control arm lock assembly 400 may include a locking member 405 in place of the locking member 345 discussed previously. The locking member 405 may be in the form of a resilient washer (e.g., having a rectangular cross-section) configured to surround the shaft 355 between the head 305 and the bushing 310. Similar to the locking member 345, the locking member 405 may be compressed by actuation of the stem 245 via the actuator 240, which locks the stem 245 to the inner sleeve 325 and locks the position of the control arm 120.

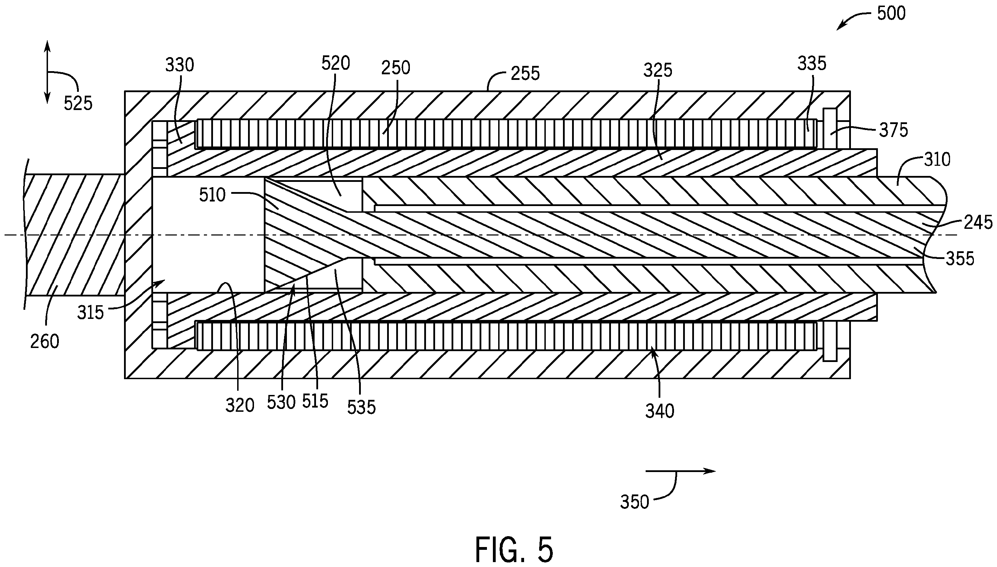

FIG. 5 illustrates another example of a control arm lock assembly 500 that can be used with the coast system 200 of FIG. 2 (e.g., as an alternative configuration of the control arm lock assembly 235). As will be recognized, the control arm lock assembly 500 shares a number of components in common with and operates in a similar fashion to the examples illustrated and described previously. For the sake of brevity, these common features will not be again described below in detail. Rather, previous discussion of commonly named or numbered features, unless otherwise indicated, also applies to example configurations of the control arm lock assembly 500.

In one example, the stem 245 may include a head 510 defining a conical or frustoconical shape. For example, the head 510 may include angled surfaces 515 configured to engage a locking member 520 arranged between the angled surfaces 515 of the head 510 and the inner surface 320 of the inner sleeve 325. In use, as the stem 245 actuates in the direction show by arrow 350, the angled surfaces 515 of the head 510 drive the locking member 520 outwards (e.g., in the direction shown by arrow 525) such that the locking member 520 contacts the inner surface 320 to lock the stem 245 to the inner sleeve 325 and correspondingly lock the position of the control arm 120. In one example, the locking member 520 may be in the form of a resilient (e.g., rubber or any other resilient material) insert configured to fit within a pocket 530 formed between the angled surfaces 515 of the head 510 and the inner surface 320. In another example, the resilient insert may include congruent angled surfaces 535 configured to engage with the angled surfaces 515 of the head 510 to radially expand the resilient insert during actuation of the stem 245.

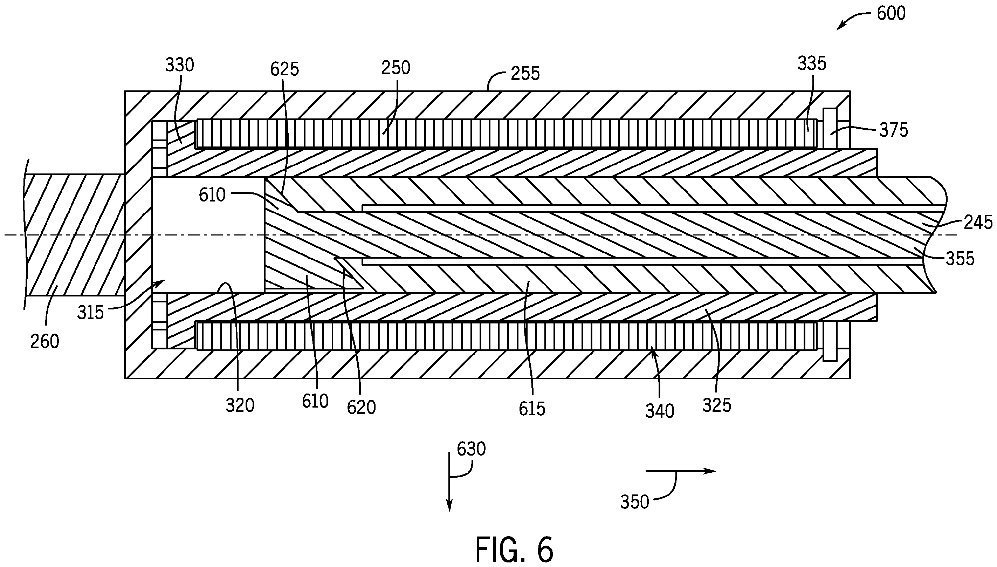

FIG. 6 illustrates another example of a control arm lock assembly 600 that can be used with the coast system 200 of FIG. 2 (e.g., as an alternative configuration of the control arm lock assembly 235). As will be recognized, the control arm lock assembly 600 shares a number of components in common with and operates in a similar fashion to the examples illustrated and described previously. For the sake of brevity, these common features will not be again described below in detail. Rather, previous discussion of commonly named or numbered features, unless otherwise indicated, also applies to example configurations of the control arm lock assembly 600.

In one example, the stem 245 may include a head 610 in the form of a wedge (e.g., with a triangular cross-section). The head 610 may include an angled surface 620 configured to engage with a congruent angled surface 625 of a bushing 615. The bushing 615 may be similar to the bushing 310 described previously, with the addition of the angled surface 625. Thus, as the stem 245 actuates in the direction shown by arrow 350, the angled surface 620 of the head 610 engages the angled surface 625 of the bushing 615, which drives the head 610 into contact with the inner surface 320 of the inner sleeve 325 to lock the stem 245 to the inner sleeve 325 and correspondingly lock the position of the control arm 120. For example, engagement between the angled surface 620 and the angled surface 625 during actuation of the stem 245 may drive the head 610 in the direction shown by arrow 630. Thus, the head 610 may contact or grip the inner surface 320 of the inner sleeve 325 to lock the stem 245 to the inner sleeve 325. In one example, the head 610 may include a surface having a high-friction or rubberized coating configured to increase friction between the head 610 and the inner surface 320.

According to one aspect, preferably according to the mentioned example above in relation to Fig. 6, there is suggested a control arm lock assembly 600 for a material handling vehicle 100 comprising an inner sleeve 325 defining a central opening 315, an actuator 240, a stem 245 arranged within the central opening 315, the stem having a head with an angled surface 620 at one end, and the stem to be selectively actuated via the actuator 240, a bushing 310 having an angled surface 625 at one end, the bushing arranged within the central opening 315 between the stem 245 and an inner surface 320 of the inner sleeve 325; and wherein actuation of the stem 245 via the actuator 240 drives the angled surface 620 of the stem against the angled surface 625 of the bushing to lock the stem 245 to the inner sleeve 325.

The control arm lock assembly 235 of any of the aspects above, wherein the inner surface 320 of the inner sleeve 325 defines a smooth, continuous, surface profile.

The control arm lock assembly 1000 of any of the aspects above, wherein the inner sleeve 705 includes a cutout 730, and wherein the cutout 730 receives a collar 715 positioned between the inner surface 725 of the inner sleeve and the resilient locking member.

The control arm lock assembly 235 of any of the aspects above, further comprising an outer sleeve 255 circumferentially arranged around the inner sleeve 325, a ledge 330 extending from the inner sleeve 325 towards the outer sleeve 255, a gap 340 formed between the inner sleeve 325 and the outer sleeve 255 via the ledge 330, and a biasing element 250 arranged within the gap 340.

The control arm lock assembly 235 of any of the aspects above, wherein the biasing element 250 opposes a braking force of a deadman brake system when the inner sleeve 325 is locked to the stem 245 such that a control arm 120 of the material handling vehicle 100 is locked into a position set by an operator of the material handling vehicle 100.

The control arm lock assembly 235 of any of the aspects above, wherein actuation of the outer sleeve 255, via actuation of a control arm 120 of the material handling vehicle 100, compresses the biasing element 250 within the gap 340.

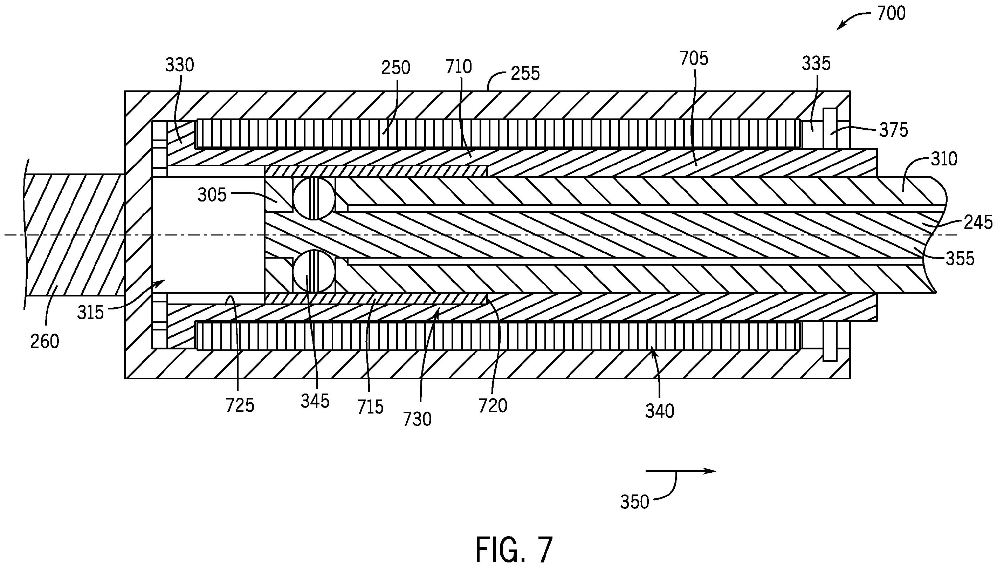

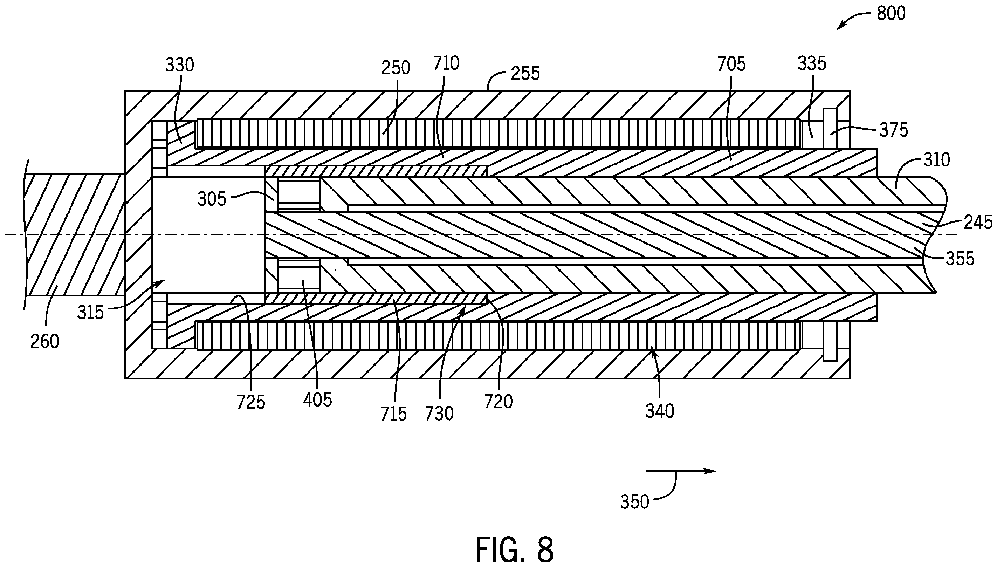

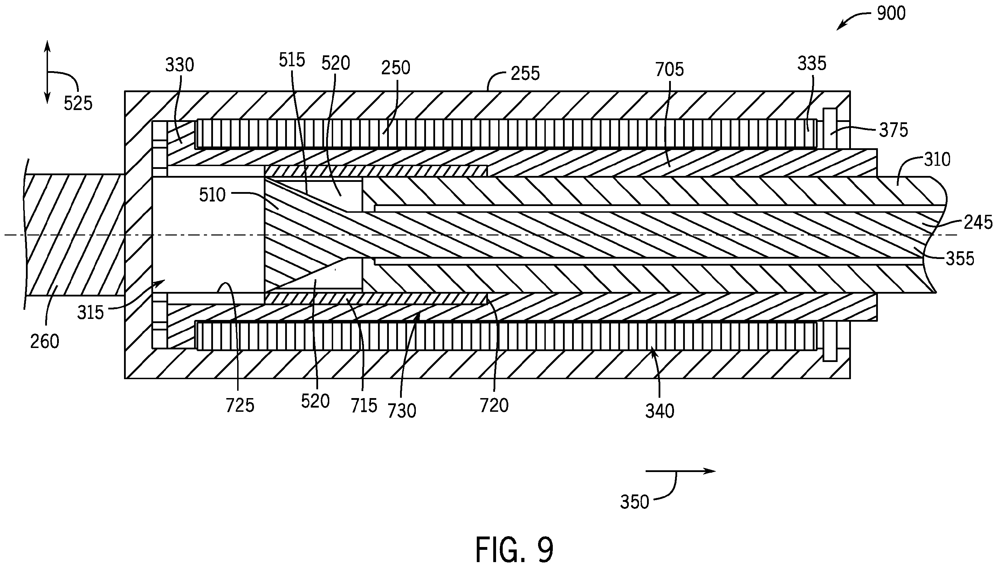

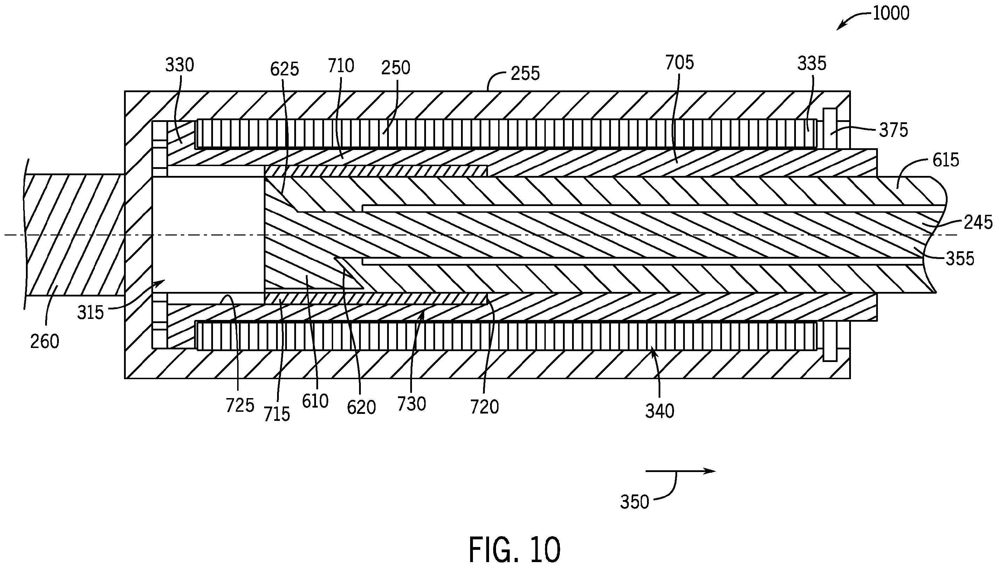

FIGS. 7-10 illustrate examples of a control arm lock assembly 700, control arm lock assembly 800, control arm lock assembly 900, and control arm lock assembly 1000 that can be used with the coast system 200 of FIG. 2 (e.g., as an alternative configuration of the control arm lock assembly 235). As will be recognized, the control arm lock assembly 700, control arm lock assembly 800, control arm lock assembly 900, and control arm lock assembly 1000 share a number of components in common with and operates in a similar fashion to the examples illustrated and described previously. For the sake of brevity, these common features will not be again described below in detail. Rather, previous discussion of commonly named or numbered features, unless otherwise indicated, also apply to example configurations of the control arm lock assembly 700, control arm lock assembly 800, control arm lock assembly 900, and control arm lock assembly 1000.

In one example, the control arm lock assembly 700, control arm lock assembly 800, control arm lock assembly 900, and control arm lock assembly 1000 may include an inner sleeve 705 having a cutout 730 defined by a wall 720. The cutout and the wall 720 may form a reduced thickness portion 710 of the inner sleeve 705. In one example, the cutout may receive a collar 715 configured to abut the wall 720 of the cutout. In one example, the collar 715 may be configured to add additional friction or grip to the control arm lock assembly, which may increase overall functionality of the system. For example, the collar 715 may be made from a higher friction material than the inner sleeve 705. In another example, the collar 715 may include a surface treatment configured to increase friction between the locking members 345, the collar 715, and the inner surface 725 of the inner sleeve 705.

In some implementations, devices or systems disclosed herein can be utilized, manufactured, or installed using methods embodying aspects of the invention. Correspondingly, any description herein of particular features, capabilities, or intended purposes of a device or system is generally intended to include disclosure of a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated or limited, discussion herein of any method of manufacturing or using for a particular device or system, including installing the device or system, is intended to inherently include disclosure, as embodiments of the invention, of the utilized features and implemented capabilities of such device or system.

Also as used herein, unless otherwise limited or defined, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "either," "one of," "only one of," or "exactly one of." For example, a list of "one of A, B, or C" indicates options of: A, but not B and C; B, but not A and C; and C, but not A and B. A list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more of A, one or more of B, and one or more of C. Similarly, a list preceded by "a plurality of' (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

As used herein, unless otherwise defined or limited, directional terms are used for convenience of reference for discussion of particular figures or examples. For example, references to downward (or other) directions or top (or other) positions may be used to discuss aspects of a particular example or figure, but do not necessarily require similar orientation or geometry in all installations or configurations.

The previous description of the disclosed embodiments is provided to enable any person skilled in the art to make or use the invention. Given the benefit of this disclosure, various modifications to these embodiments will be readily apparent to those skilled in the art, and the principles defined herein may be applied to other embodiments without departing from the spirit or scope of the invention. Thus, the invention is not intended to be limited to the embodiments shown herein but is to be accorded the widest scope consistent with the principles and novel features disclosed herein.

## Claims

1. A control arm lock assembly (235) for a material handling vehicle (100), the control arm lock assembly (235) comprising:
an inner sleeve (325) defining a central opening (315);
an actuator (240);
a stem (245) arranged within the central opening (315), the stem (245) to be selectively actuated via the actuator (240);
a bushing (310) arranged within the central opening (315) between the stem (245) and an inner surface (320) of the inner sleeve (325); and
a resilient locking member (345) arranged within the central opening (315), the resilient locking member (345) axially constrained between a head (305) of the stem (245) and the bushing (310);
wherein actuation of the stem (245) via the actuator (240) compresses the resilient locking member (345) between the head and the bushing (310); and
wherein compression of the resilient locking member (345) causes the resilient locking member (345) to engage the inner surface (320) of the inner sleeve (325) to lock the stem (245) to the inner sleeve (325).

2. The control arm lock assembly (235) of claim 1, wherein the resilient locking member (345) is a resilient O-ring.

3. The control arm lock assembly (235) of claim 1 or 2, wherein the resilient locking member (345) is a resilient washer.

4. The control arm lock assembly (235) of any of the claims 1 to 3, wherein the head (305) of the stem (245) defines a disk-shaped profile forming a pocket (365) between the head (305) and the bushing (310), the pocket (365) configured to receive the resilient locking member (345).

5. The control arm lock assembly (500) of any of the claims above, wherein the head (510) of the stem (245) defines a cone-shaped profile including angled surfaces (515), and wherein actuation of the stem (245) causes the resilient locking member (520) to be pushed away from the stem (245), into contact with the inner surface (320) of the inner sleeve (325), via the angled surfaces (515) of the head (510).

6. The control arm lock assembly (235) of any of the claims above, wherein the inner surface (320) of the inner sleeve (325) defines a smooth, continuous, surface profile.

7. The control arm lock assembly (700) of any of the claims above, wherein the inner sleeve (705) includes a cutout (730), and wherein the cutout (730) receives a collar (715) positioned between the inner surface (725) of the inner sleeve and the resilient locking member.

8. The control arm lock assembly (235) of any of the claims above, further comprising:
an outer sleeve (255) circumferentially arranged around the inner sleeve (325);
a ledge (330) extending from the inner sleeve (325) towards the outer sleeve (255);
a gap (340) formed between the inner sleeve (325) and the outer sleeve (255) via the ledge (330); and
a biasing element (250) arranged within the gap (340).

9. The control arm lock assembly (235) of claim 8, wherein the biasing element (250) opposes a braking force of a deadman brake system when the inner sleeve (325) is locked to the stem (245) such that a control arm (120) of the material handling vehicle (100) is locked into a position set by an operator of the material handling vehicle (100).

10. The control arm lock assembly (235) of claim 8 or 9, wherein actuation of the outer sleeve (255), via actuation of a control arm (120) of the material handling vehicle (100), compresses the biasing element (250) within the gap (340).

11. A method of locking a control arm (120) of a material handing vehicle (100), the method comprising:
actuating a stem (245) of a control arm lock assembly (23 5) in a first direction via activation of an actuator (240);
compressing a resilient locking member (345) between a head (305) of the stem (245) and a bushing (310) circumferentially surrounding a portion of the stem (245); and
frictionally locking the stem (245) to an inner sleeve (325) of the control arm lock assembly (235) via frictional engagement between the resilient locking member (345) and an inner surface (320) of the inner sleeve (325).

12. The method of claim 11, wherein the resilient locking member (345) is a resilient O-ring.

13. The method of claim 11 or 12, wherein the resilient locking member (345) is a resilient washer.

14. The method of any of the claims 11 to 13, wherein the inner surface (320) of the inner sleeve (325) defines a smooth, continuous, surface profile.

15. The method of any of the claims 11 to 14, wherein the inner sleeve (705) includes a cutout (730), and wherein the cutout (730) receives a collar (715) positioned between the inner surface (725) of the inner sleeve (705) and the resilient locking member (345).
